# EUROPEAN PATENT APPLICATION

(11) **EP 4 653 672 A1**
(43) Date of publication of application: **26.11.2025**
(21) Application number: 25178639.8
(22) Date of filing: 23.05.2025
(51) Int. Cl.: F01D 25/20, B01D 35/14, F01M 1/10

(54) **ENGINE OIL SYSTEM FOR AN AIRCRAFT PROPULSION SYSTEM**

(30) Priority: 24.05.2024 US 202418673437
(71) Applicant: PRATT & WHITNEY CANADA CORP., Longueuil, Québec J4G 1A1 (CA)
(72) Inventor: ARSA, Christophe, (01BE5) Longueuil, J4G 1A1 (CA)
(74) Representative: Dehns

(57) **Abstract**

An engine oil system (34) includes a filter assembly (68). The filter assembly (68) includes a filter manifold (70) and at least one bypass valve (74). The filter manifold (70) includes a manifold body (80). The manifold body (80) forms an inlet passage (82) and an outlet passage (84). The manifold body (80) includes a wall portion (92). The wall portion (92) forms the inlet passage (82) and the outlet passage (84). The wall portion (92) forms a bypass channel (98) extending between and to the inlet passage (82) and the outlet passage (84). The at least one bypass valve (74) includes a housing (100) and a valve member (102). The housing (100) is disposed on the manifold body (80). The housing (100) extends circumferentially about a valve axis (106). The valve member (102) includes a valve body (114) forming a valve plug end (120). The valve member (102) is positionable along the valve axis (106) in a closed position and an open position. In the closed position the valve plug end (120) is seated on the wall portion (92) obstructing the bypass channel (98). In the open position the valve plug end (120) is separated from the wall portion.

## Description

### TECHNICAL FIELD

This disclosure relates to oil systems for aircraft propulsion systems.

### BACKGROUND OF THE ART

Propulsion systems for aircraft may typically include rotational equipment configured for facilitating aircraft propulsion, generating electrical power, and/or other functions of aircraft operation. In many cases, rotational equipment may require lubrication and/or cooling, for example, using one or more oil systems to distribute oil to the rotational equipment and/or other oil loads. Various oil systems are known in the art. While these known systems may be useful for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an engine oil system for an aircraft propulsion system includes a filter assembly. The filter assembly includes a filter manifold and at least one bypass valve. The filter manifold includes a manifold body, an oil inlet, and an oil outlet. The manifold body forms an inlet passage, an outlet passage, and a valve cavity. The inlet passage is disposed at the oil inlet. The outlet passage disposed at the oil outlet. The valve cavity is disposed at the outlet passage. The manifold body includes a wall portion extending between and to an inlet passage side surface and an outlet passage side surface. The inlet passage side surface forms the inlet passage. The outlet passage side surface forms the outlet passage. The wall portion forms a bypass channel extending between and to the inlet passage side surface and the outlet passage side surface. The at least one bypass valve includes a housing, a valve member, and a valve positioning assembly. The housing is disposed on the manifold body within the valve cavity. The housing extends circumferentially about a valve axis to form a valve chamber. The valve member is positioned within the valve chamber. The valve member includes a valve body forming a valve plug end. The valve member is positionable along the valve axis in a closed position and an open position. In the closed position of the valve member the valve plug end is seated on the wall portion obstructing the bypass channel. In the open position of the valve member the valve plug end is separated from the wall portion. The valve position assembly is disposed at the housing. The valve position assembly is configured to control a position of the valve member in the closed position or the open position.

In any of the aspects or embodiments described above and herein, the valve member may further include a piston and a stem. The piston may be disposed within the valve chamber. The stem may extend along the valve axis between and to the piston and the valve body.

In any of the aspects or embodiments described above and herein, the valve position assembly may include a spring disposed within the valve chamber. The spring may be positioned between and contacting the housing and the piston. The spring may bias the valve member in the closed position.

In any of the aspects or embodiments described above and herein, the inlet passage may extend along an inlet passage centerline axis. The outlet passage may extend along an outlet passage centerline axis. The inlet passage centerline axis may be substantially parallel to the outlet passage centerline axis.

In any of the aspects or embodiments described above and herein, the inlet passage may extend along an inlet passage centerline axis. The outlet passage may extend along an outlet passage centerline axis. The valve axis may be substantially orthogonal to the inlet passage centerline axis and the outlet passage centerline axis.

In any of the aspects or embodiments described above and herein, the at least one bypass valve may include a plurality of bypass valves.

In any of the aspects or embodiments described above and herein, the at least one bypass valve may include an anti-rotation feature.

In any of the aspects or embodiments described above and herein, the valve body may extend longitudinally between and to a first longitudinal end and a second longitudinal end. The valve body may include a first semi-circular end portion at the first longitudinal end, a second semi-circular end portion at the second longitudinal end, and an intermediate portion connecting the first semi-circular end portion and the second semi-circular end portion.

In any of the aspects or embodiments described above and herein, the first semi-circular end portion and the second semi-circular end portion may have a diameter. The intermediate portion may have a length extending between and to the first semi-circular end portion and the second semi-circular end portion. A ratio of the length to the diameter may be less than or equal to 1.75.

In any of the aspects or embodiments described above and herein, the ratio may be between 0.25 and 1.75.

According to another aspect of the present disclosure, an engine oil system for an aircraft propulsion system includes a pump and a filter assembly. The pump is configured to circulate oil along an oil flow path through one or more engine oil loads. The filter assembly forms a portion of the oil flow path. The filter assembly includes a filter manifold, a filter, and at least one bypass valve. The filter manifold includes a manifold body, an oil inlet, and an oil outlet. The manifold body forms an inlet passage, an outlet passage, and a valve cavity. The inlet passage extends between and to the oil inlet and the filter. The outlet passage extends between and to the oil outlet and the filter. The manifold body includes a wall portion forming the inlet passage and the outlet passage. The wall portion forms a bypass channel extending between and to the inlet passage and the outlet passage. The at least one bypass valve includes a housing, a valve member, and a valve positioning assembly. The housing is mounted on the manifold body. The housing extends circumferentially about a valve axis to form a valve chamber. The valve member is positioned within the valve chamber. The valve member includes a valve body forming a valve plug end. The valve member is translatable along the valve axis between a closed position and an open position. In the closed position of the valve member the valve plug end is seated on the wall portion obstructing the bypass channel. In the open position of the valve member the valve plug end is separated from the wall portion. The valve position assembly is disposed at the housing. The valve position assembly includes a spring biasing the valve member in the closed position.

In any of the aspects or embodiments described above and herein, the inlet passage may extend along an inlet passage centerline axis. The outlet passage may extend along an outlet passage centerline axis. The inlet passage centerline axis may be substantially parallel to the outlet passage centerline axis.

In any of the aspects or embodiments described above and herein, the inlet passage may extend along an inlet passage centerline axis. The outlet passage may extend along an outlet passage centerline axis. The valve axis may be substantially orthogonal to the inlet passage centerline axis and the outlet passage centerline axis.

In any of the aspects or embodiments described above and herein, the at least one bypass valve may include an anti-rotation feature. The anti-rotation feature may include a slot and a protrusion disposed in the slot. The slot may be formed by the valve member and the protrusion may be formed by the housing.

In any of the aspects or embodiments described above and herein, the valve body may extend longitudinally between and to a first longitudinal end and a second longitudinal end. The valve body may include a first semi-circular end portion at the first longitudinal end, a second semi-circular end portion at the second longitudinal end, and an intermediate portion connecting the first semi-circular end portion and the second semi-circular end portion.

In any of the aspects or embodiments described above and herein, the first semi-circular end portion and the second semi-circular end portion may have a diameter. The intermediate portion may have a length extending between and to the first semi-circular end portion and the second semi-circular end portion. A ratio of the length to the diameter may be less than or equal to 1.75.

According to another aspect of the present disclosure, an engine oil system for an aircraft propulsion system includes a filter assembly. The filter assembly may include a filter manifold and at least one bypass valve. The filter manifold includes a manifold body, an oil inlet, and an oil outlet. The manifold body forms an inlet passage and an outlet passage. The inlet passage is disposed at the oil inlet. The outlet passage is disposed at the oil outlet. The manifold body includes a wall portion extending between and to an inlet passage side surface and an outlet passage side surface. The inlet passage side surface forms the inlet passage. The outlet passage side surface forms the outlet passage. The wall portion forms a bypass channel extending between and to the inlet passage side surface and the outlet passage side surface. The at least one bypass valve includes a housing, a valve member, and a valve positioning assembly. The housing is disposed on the manifold body. The housing extends circumferentially about a valve axis to form a valve chamber at the outlet passage. The valve member includes a piston, a stem, and a valve body. The piston is positioned within the valve chamber. The stem interconnects the piston and the valve body. The valve body forms a valve plug end. The valve member is positionable along the valve axis in a closed position and an open position. In the closed position of the valve member the valve plug end is seated on the wall portion obstructing the bypass channel. In the open position of the valve member the valve plug end is separated from the wall portion. The valve position assembly is connected to the piston. The valve position assembly is configured to control a position of the valve member in the closed position or the open position.

In any of the aspects or embodiments described above and herein, the valve position assembly may include a spring disposed within the valve chamber. The spring may be positioned between and contacting the housing and the piston. The spring may bias the valve member in the closed position.

In any of the aspects or embodiments described above and herein, the valve body may extend longitudinally between and to a first longitudinal end and a second longitudinal end. The valve body may include a first semi-circular end portion at the first longitudinal end, a second semi-circular end portion at the second longitudinal end, and an intermediate portion connecting the first semi-circular end portion and the second semi-circular end portion.

In any of the aspects or embodiments described above and herein, the first semi-circular end portion and the second semi-circular end portion may have a diameter. The intermediate portion may have a length extending between and to the first semi-circular end portion and the second semi-circular end portion. A ratio of the length to the diameter may be less than or equal to 1.75.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates an engine oil system for an aircraft propulsion system, in accordance with one or more embodiments of the present disclosure.
FIG. 4 schematically illustrates a cutaway, side view of an engine oil system for an aircraft propulsion system, in accordance with one or more embodiments of the present disclosure.
FIG. 5 illustrates a cross-sectional view of the engine oil system of FIG. 4 taken along Line 5-5 of FIG. 4, in accordance with one or more embodiments of the present disclosure.
FIG. 6 schematically illustrates another cutaway, side view of the engine oil system of FIG. 4, in accordance with one or more embodiments of the present disclosure.
FIG. 7 schematically illustrates a portion of a bypass valve of an engine oil system for an aircraft propulsion system, in accordance with one or more embodiments of the present disclosure.
FIG. 8 illustrates a perspective view of a portion of another bypass valve of an engine oil system for an aircraft propulsion system, in accordance with one or more embodiments of the present disclosure.
FIG. 9 schematically illustrates a cutaway, side view of another engine oil system for an aircraft propulsion system, in accordance with one or more embodiments of the present disclosure.

### DETAILED DESCRIPTION

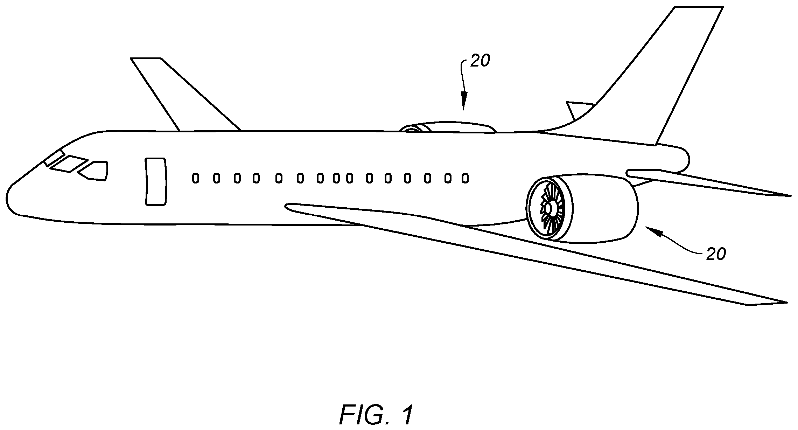

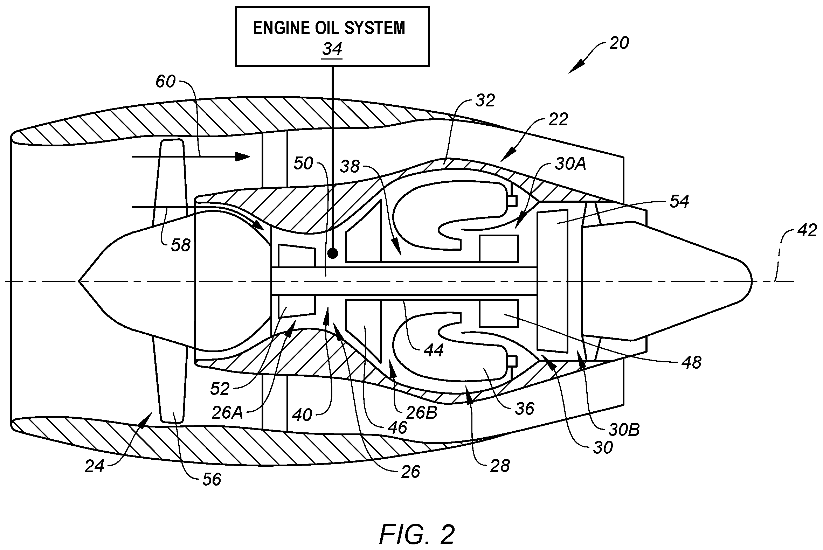

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). FIG. 2 schematically illustrates a cutaway, side view of the propulsion system 20.

The propulsion system 20 of FIG. 2 includes a gas turbine engine 22. The gas turbine engine 22 of FIG. 2 is configured as a multi-spool turbofan gas turbine engine. However, while the following description and accompanying drawings may refer to the turbofan gas turbine engine 22 of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine. Moreover, aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.).

The gas turbine engine 22 of FIG. 2 includes a fan section 24, a compressor section 26, a combustor section 28, a turbine section 30, an engine static structure 32, and an engine oil system 34. The compressor section 26 of FIG. 2 includes a low-pressure compressor (LPC) section 26A and a high-pressure compressor (HPC) section 26B. The combustor section 28 includes a combustor 36 (e.g., an annular combustor). The turbine section 30 of FIG. 2 includes a high-pressure turbine (HPT) section 30A and a low-pressure turbine (LPT) section 30B.

Components of the fan section 24, the compressor section 26, and the turbine section 30 form a first rotational assembly 38 (e.g., a high-pressure spool) and a second rotational assembly 40 (e.g., a low-pressure spool) of the gas turbine engine 22. The first rotational assembly 38 and the second rotational assembly 40 are mounted for rotation about a rotational axis 42 (e.g., an axial centerline) of the gas turbine engine 22 relative to the engine static structure 32. The present disclosure, however, is not limited to the two-spool gas turbine engine configuration of FIG. 2. For example, aspects of the present disclosure may be equally applicable to single-spool and three-spool gas turbine engine configurations.

The first rotational assembly 38 includes a first shaft 44, a bladed first compressor rotor 46 for the high-pressure compressor section 26B, and a bladed first turbine rotor 48 for the high-pressure turbine section 30A. The first shaft 44 interconnects the bladed first compressor rotor 46 and the bladed first turbine rotor 48.

The second rotational assembly 40 includes a second shaft 50, a bladed second compressor rotor 52 for the low-pressure compressor section 26A, a bladed second turbine rotor 54 for the low-pressure turbine section 30B, and a bladed fan rotor 56 for the fan section 24. The second shaft 50 interconnects the bladed second compressor rotor 52 and the bladed second turbine rotor 54. The second shaft 50 may additionally interconnect the bladed fan rotor 56 with the bladed second compressor rotor 52 and the bladed second turbine rotor 54. Alternatively, the second shaft 50 may be coupled with the bladed fan rotor 56 by a geartrain (e.g., a transmission, a speed change device, an epicyclic geartrain, etc.). The first shaft 44 and the second shaft 50 of FIG. 2 are concentric and configured to rotate about the rotational axis 42. The present disclosure, however, is not limited to concentric configurations of the first shaft 44 and the second shaft 50.

The engine static structure 32 may include one or more engine cases, cowlings, bearing assemblies, inner fixed structures, and/or other non-rotating structures configured to house and/or support (e.g., rotationally support) components of the gas turbine engine sections 24, 26, 28, 30. The engine static structure 32 may form an exterior (e.g., an outer radial portion) of the gas turbine engine 22.

In operation of the gas turbine engine 22, ambient air is directed through the fan section 24 and into a core flow path 58 (e.g., an annular flow path) and a bypass flow path 60 (e.g., an annular flow path) by rotation of the bladed fan rotor 56. Air flow along the core flow path 58 is compressed in the low-pressure compressor section 26A and the high-pressure compressor section 26BB, mixed and burned with fuel in the combustor 36, and the resultant combustion gas is directed through the high-pressure turbine section 30A and the low-pressure turbine section 30B. The bladed first turbine rotor 48 and the bladed second turbine rotor 54 rotationally drive the first rotational assembly 38 and the second rotational assembly 40, respectively, in response to the combustion gas flow through the high-pressure turbine section 30A and the low-pressure turbine section 30B.

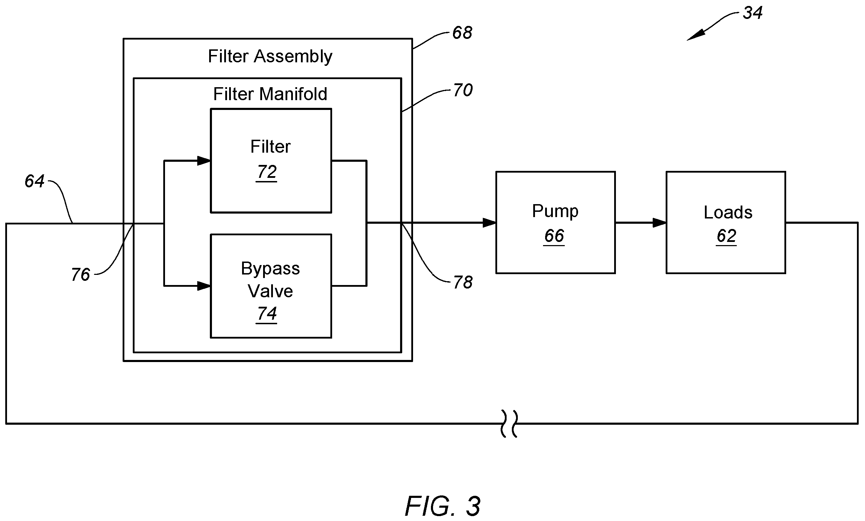

Referring to FIGS. 2 and 3, the engine oil system 34 is configured to facilitate lubrication and/or cooling for components of the propulsion system 20 and its gas turbine engine 22. FIG. 3 schematically illustrates the engine oil system 34. The present disclosure is not limited to the foregoing exemplary configuration of the engine oil system 34 of FIG. 3, and the engine oil system 34 may include additional and/or alternative oil system components (e.g., tanks, valves, pumps, conduits, regulators, etc.) suitable for facilitating lubrication and/or cooling for components of the propulsion system 20 and its gas turbine engine 22, referred to herein as engine oil loads 62. The engine oil loads 62 may include, but are not limited to, bearing assemblies, geartrain components (e.g., a gearbox or gear assembly), shafts (e.g., the first shaft 44 and the second shaft 50), and the like.

The engine oil system 34 of FIG. 3 includes an oil flow path 64, a pump 66, and a filter assembly 68. The pump 66 is configured to circulate oil along the oil flow path 64 to direct (e.g., pump) the oil to the engine oil loads 62 for lubrication and/or cooling of the engine oil loads 62. Oil flow along the oil flow path 64 is additionally directed through the filter assembly 68 to remove particulate matter and contaminants from the oil. The filter assembly 68 includes a filter manifold 70, a filter 72, and a bypass valve 74. The filter manifold 70 includes an oil inlet 76 and an oil outlet 78. The filter manifold 70 houses the filter 72 and the bypass valve 74. The filter manifold 70 is configured to direct the oil through the filter 72 and/or the bypass valve 74 along the oil flow path 64 from the oil inlet 76 to the oil outlet 78.

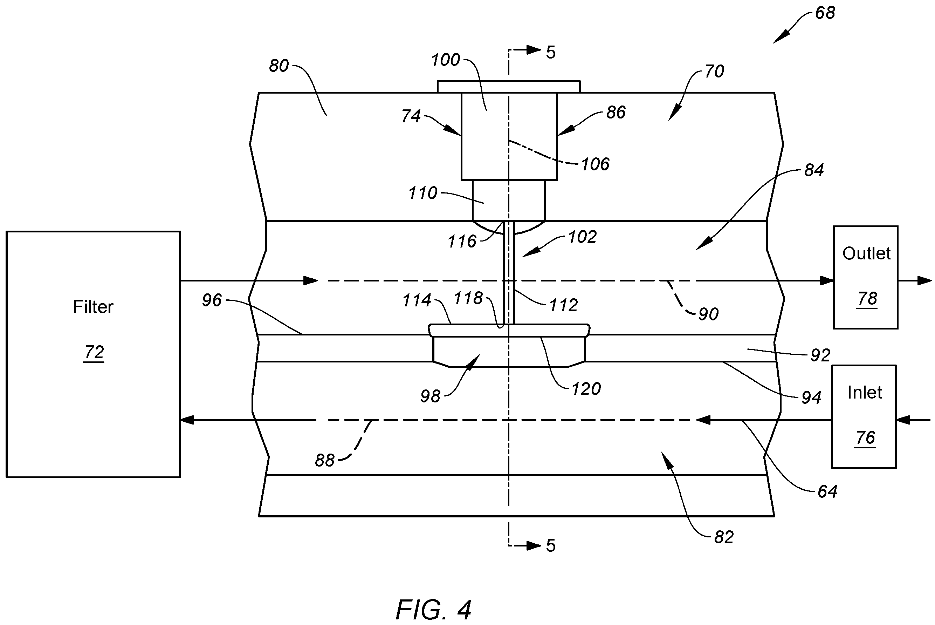

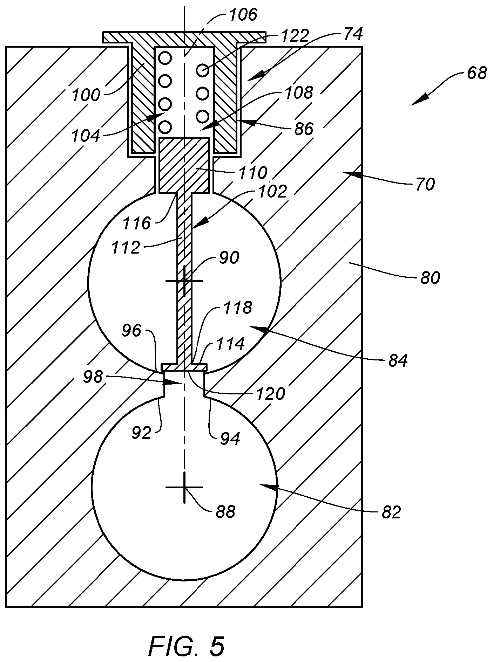

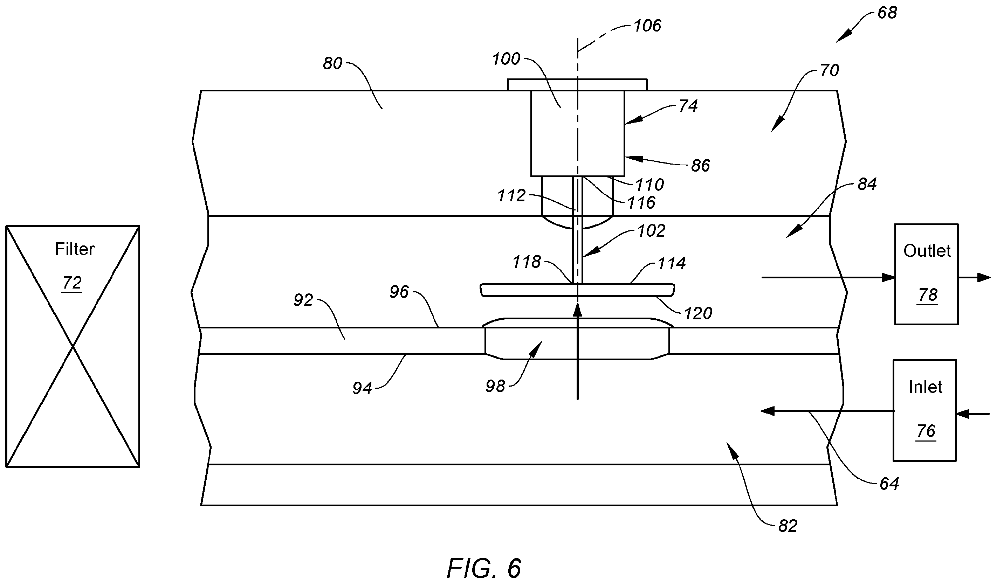

FIGS. 4-6 illustrate the filter assembly 68 in greater detail. FIG. 4 schematically illustrates a cutaway view of the filter assembly 68 with the bypass valve 74 in a closed condition of the bypass valve 74. FIG. 5 illustrates a cross-sectional view of the filter assembly 68 of FIG. 4 taken along Line 5-5 of FIG. 4. FIG. 6 schematically illustrates a cutaway view of the filter assembly 68 with the bypass valve 74 in an open (e.g., bypass) condition of the bypass valve 74.

The filter manifold 70 includes a manifold body 80. The manifold body 80 forms an inlet passage 82, an outlet passage 84, and a valve cavity 86. The inlet passage 82 and the outlet passage 84 form respective portions of the oil flow path 64 through the filter manifold 70. The inlet passage 82 extends through the manifold body 80 between and to the oil inlet 76 and the filter 72. For example, at least a portion of the inlet passage 82 may extend along an inlet passage centerline axis 88 through the manifold body 80. The outlet passage 84 extends through the manifold body 80 between and to the oil inlet 76 and the filter 72. For example, at least a portion of the outlet passage 84 may extend along an outlet passage centerline axis 90 through the manifold body 80. The outlet passage centerline axis 90 may be parallel to or substantially parallel (e.g., within ten degrees (10°) of parallel) to the inlet passage centerline axis 88. As shown in FIG. 5, for example, one or both of the inlet passage 82 and the outlet passage 84 may have a substantially circular cross-sectional shape (e.g., orthogonal to the inlet passage centerline axis 88 and the outlet passage centerline axis 90, respectively). Of course, the inlet passage 82 and the outlet passage 84 are not limited to circular cross-sectional shapes, and one or both of the inlet passage 82 and the outlet passage 84 may alternatively have a rectangular, oblong, or other cross-sectional shape.

The manifold body 80 includes a wall portion 92 forming the inlet passage 82 and the outlet passage 84. The wall portion 92 may be understood as a portion of the manifold body 80 between (e.g., directly between) the inlet passage 82 and the outlet passage 84. The wall portion 92 extends between and to an inlet passage side surface 94 of the wall portion 92 and an outlet passage side surface 96 of the wall portion 92. The inlet passage side surface 94 forms a portion of the inlet passage 82. The outlet passage side surface 96 forms a portion of the outlet passage 84. The wall portion 92 forms a bypass channel 98 extending through the wall portion 92 between and to the inlet passage side surface 94 and the outlet passage side surface 96. The bypass channel 98 connects the inlet passage 82 and the outlet passage 84 together in fluid communication. The manifold body 80 forms the valve cavity 86 at (e.g., on, adjacent, or proximate) the outlet passage 84. More specifically, the manifold body 80 forms the valve cavity 86 opposite the outlet passage 84 from the bypass channel 98.

The bypass valve 74 includes a housing 100, a valve member 102, and a valve positioning assembly 104. The bypass valve 74 extends along a valve axis 106. The valve axis 106 may be oriented orthogonal to or substantially orthogonal (e.g., within ten degrees (10°) of orthogonal) to the inlet passage centerline axis 88 and/or the outlet passage centerline axis 90. The housing 100 is mounted on the manifold body 80 within the valve cavity 86. The housing 100 extends circumferentially about (e.g., completely around) the valve axis 106 to form a valve chamber 108 of the housing 100. The valve chamber 108 is disposed coincident (e.g., axially coincident) with a portion of the valve cavity 86 along the valve axis 106.

The valve member 102 is disposed within the valve chamber 108. The valve member 102 is configured to translate within the valve chamber 108 along the valve axis 106. The valve member 102 of FIGS. 4-6 includes a piston 110, a stem 112, and a valve body 114. The present disclosure, however, is not limited to the foregoing exemplary configuration of the valve member 102. The piston 110 is disposed within the valve chamber 108 and the valve cavity 86. The piston 110 is configured to translate within the valve chamber 108 along the valve axis 106. The stem 112 extends along the valve axis 106 and interconnects the piston 110 and the valve body 114. The stem 112 extends along the valve axis 106 between and to a first axial end 116 of the stem 112 and a second axial end 118 of the stem 112. The first axial end 116 is disposed at (e.g., on, adjacent, or proximate) the piston 110. The second axial end 118 is disposed at (e.g., on, adjacent, or proximate) the valve body 114. The valve body 114 forms a valve plug end 120 configured to prevent (e.g., obstruct) oil flow through the bypass channel 98. Accordingly, the valve plug end 120 may have a size and shape which substantially approximates a size and shape of the bypass channel 98 at (e.g., on, adjacent, or proximate) the outlet passage side surface 96. The valve plug end 120 is positioned facing the bypass channel 98. The valve plug end 120 may extend entirely or in substantial part along a plane orthogonal to the valve axis 106.

The valve member 102 is positionable (e.g., translatable along the valve axis 106) in a closed position (see FIGS. 4 and 5) and an open position (see FIG. 6). In the closed position, the valve plug end 120 is seated at (e.g., on, adjacent, or proximate) the wall portion 92 (e.g., the outlet passage side surface 96) to prevent all or substantially all oil flow through the bypass channel 98 from the inlet passage 82 to the outlet passage 84. In the open position, the valve plug end 120 is separated from the wall portion 92 (e.g., the outlet passage side surface 96) to permit at least some oil flow (e.g., a substantial volume of oil flow greater than incidental seat leakage) through the bypass channel 98 from the inlet passage 82 to the outlet passage 84.

The valve positioning assembly 104 is configured to control a position of the valve member 102 relative to the bypass channel 98 (e.g., in the closed position or the open position). The valve positioning assembly 104 may be configured for passive control of the valve member 102 position. For example, the valve positioning assembly 104 of FIG 5 includes a spring 122. The spring 122 is disposed within the valve chamber 108 axially between the housing 100 and the piston 110. The spring 122 is configured to bias the valve member 102 (e.g., the piston 110) along the valve axis 106 in the closed position. The present disclosure, however, is not limited to passive valve positioning assembly 104 configurations or to the use of the spring 122, and the valve positioning assembly 104 may alternatively be configured for active control of the valve member 102 position. For example, the valve positioning assembly 104 may include any suitable hydraulic actuator, pneumatic actuator, electro-mechanical actuator, or other linear actuator configured to control the position of the valve member 102.

During operation of the propulsion system 20 and its engine oil system 34, the valve member 102 may typically be positioned in the closed position such that the engine oil system 34 directs all or substantially of the oil flow along the oil flow path 64 through the filter 72. For example, the spring 122 may bias the valve member 102 in opposition to a differential pressure (*ΔP*) of the oil between the inlet passage 82 and the outlet passage 84 (e.g., across the valve body 114), thereby maintaining the valve member 102 in the closed position. During some operating conditions of the propulsion system 20 and/or its engine oil system 34, the differential pressure (*ΔP*) of the oil may overcome the biasing force of the spring 122, causing the valve member 102 to translate along the valve axis 106 into the open position. For example, the differential pressure (*ΔP*) may increase as a result of the filter 72 becoming fully or substantially obstructed (e.g., clogged by particulate matter), thereby causing the valve member 102 to position to the open position to direct at least some oil from the inlet passage 82 to the outlet passage 84 through the bypass channel 98. The differential pressure (*ΔP*) may also be sufficiently high to cause the valve member 102 to position to the open position during a cold-start condition of the propulsion system 20 (e.g., the gas turbine engine 22) as a result of the viscosity of the cold oil in the engine oil system 34. Thus, the bypass valve 74 facilitates sufficient oil flow to the engine oil loads 62 during a range of propulsion system 20 operating conditions and/or filter 72 obstruction.

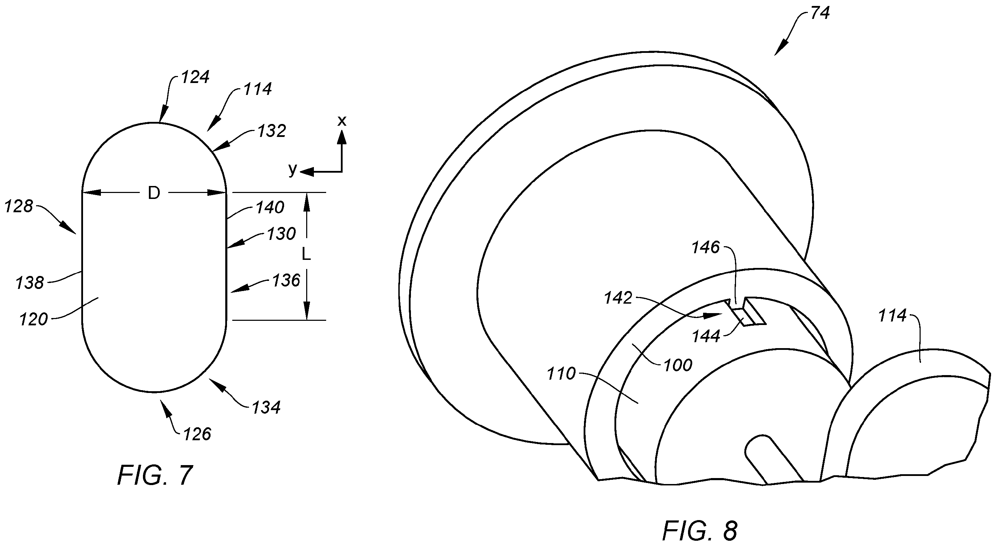

FIG. 7 illustrates schematically illustrates an embodiment of the valve body 114 and its valve plug end 120, for example, along an X-Y plane orthogonal to the valve axis 106 (see FIGS. 4-6). The valve body 114 extends (e.g., longitudinally extends) in the X-direction between and to a first longitudinal end 124 of the valve body 114 and a second longitudinal end 126 of the valve body 114. The valve body 114 extends (e.g., laterally extends) in the Y-direction between and to a first lateral end 128 of the valve body 114 and a second lateral end 130 of the valve body 114. The valve body 114 includes a first end portion 132, a second end portion 134, and an intermediate portion 136. The first end portion 132 is disposed on and forms the first longitudinal end 124. The first end portion 132 may form a curvature (e.g., a semi-circular curvature) of the first longitudinal end 124, for example, extending between and to the first lateral end 128 and the second lateral end 130. The second end portion 134 is disposed on and forms the second longitudinal end 126. The second end portion 134 may form a curvature (e.g., a semi-circular curvature) of the second longitudinal end 126, for example, extending between and to the first lateral end 128 and the second lateral end 130. The first end portion 132 and the second end portion 134 may each have a diameter D of the respective curvatures. The intermediate portion 136 extends between and to the first end portion 132 and the second end portion 134. The intermediate portion 136 of FIG. 7 includes a first linear edge 138 and a second linear edge 140. The first linear edge 138 extends along the first lateral end 128 (e.g., in the X-direction) between and to the first end portion 132 and the second end portion 134. Similarly, the second linear edge 140 extends along the second lateral end 130 (e.g., in the X-direction) between and to the first end portion 132 and the second end portion 134. The first linear edge 138 and the second linear edge 140 have a length L.

The valve body 114 (e.g., the valve plug end 120) may be configured with a ratio of the length L to the diameter D less than or equal to 1.75. Preferably, the ratio of the length L to the diameter D may be between 0.25 and 1.75, inclusive. This range of the ratio of the length L to the diameter D may be between 0.25 and 1.75 facilitates sufficient oil flow through the bypass channel 98 (e.g., during gas turbine engine 22 cold start or filter 72 obstruction) while also facilitating predictable movement of the valve member 102. For example, as a length of the valve body 114 increases (e.g., for ratios of the length L to the diameter D greater than about 1.75), the valve plug end 120 may exposed to uneven oil pressure distribution, causing the valve body 114 to deflect unevenly or to otherwise move or translate unpredictably in response to high differential pressure (*ΔP*) conditions. The elongated configuration of the valve body 114 and the correspondingly-shaped bypass channel 98 (e.g., for ratios of the length L to the diameter D greater than about 0.25) facilitates greater oil flow through the bypass channel 98 for the limited area available between the inlet passage 82 and the outlet passage 84.

Referring to FIG. 8, in some embodiments, the bypass valve 74 may include an anti-rotation feature 142. The anti-rotation feature 142 may include a slot 144 and a protrusion 146 disposed within the slot 144. For example, the anti-rotation feature 142 of FIG. 8 includes the slot 144 formed by the piston 110 and the protrusion 146 disposed on or otherwise formed by the housing 100. The present disclosure, however, is not limited to the foregoing exemplary configuration of the anti-rotation feature 142 of FIG. 8. The anti-rotation feature 142 prevents rotation of the valve body 114 relative to the valve axis 106, thereby facilitating alignment of the valve body 114 (e.g., an elongated configuration of the valve body 114) with the bypass channel 98 (see FIGS. 4-6).

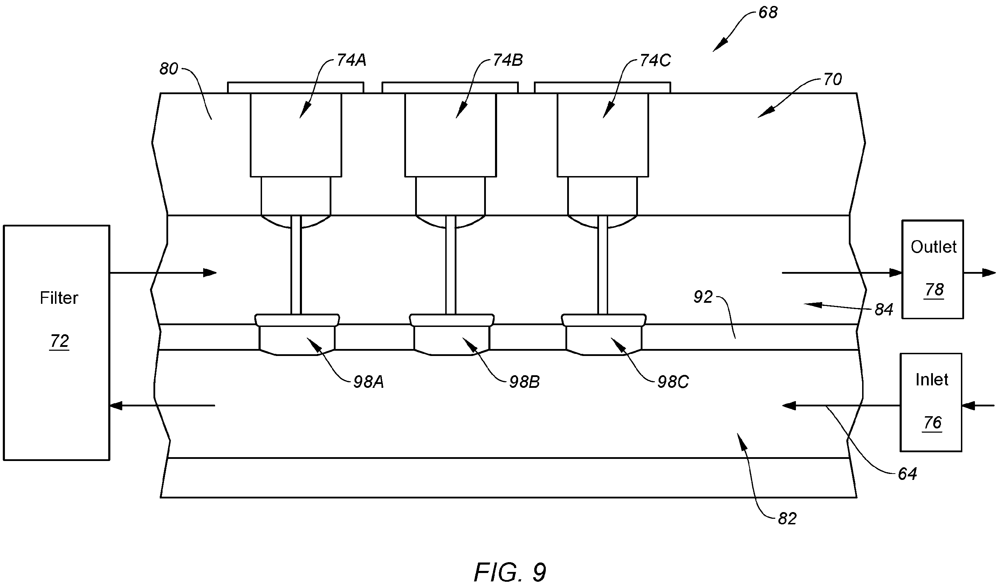

Referring to FIG. 9, in some embodiments, the filter assembly 68 may include a plurality of the bypass valve 74. For example, the filter assembly 68 of FIG. 9 includes a first bypass valve 74A, a second bypass valve 74B, and a third bypass valve 74C. However, the present disclosure is not limited to any particular quantity of the bypass valve 74. Each of the bypass valves 74A-C is configured to control oil flow through a respective bypass channel 98A-C as described above with respect to the bypass valve 74 (see FIGS. 4-6).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An engine oil system (34) for an aircraft propulsion system (20), the engine oil system (34) comprising:
a filter assembly (68) including a filter manifold (70) and at least one bypass valve (74);
the filter manifold (70) including a manifold body (80), an oil inlet (76), and an oil outlet (78), the manifold body (80) forming an inlet passage (82), an outlet passage (84), and a valve cavity (86), the inlet passage (82) disposed at the oil inlet (76), the outlet passage (84) disposed at the oil outlet (78), the valve cavity (86) disposed at the outlet passage (84), the manifold body (80) including a wall portion (92) extending between and to an inlet passage side surface (94) and an outlet passage side surface (96), the inlet passage side surface (94) forming the inlet passage (82), the outlet passage side surface (96) forming the outlet passage (84), the wall portion (92) forming a bypass channel (98) extending between and to the inlet passage side surface (94) and the outlet passage side surface (96); and
the at least one bypass valve (74) including a housing (100), a valve member (102), and a valve positioning assembly (104),
the housing (100) disposed on the manifold body (80) within the valve cavity (86), the housing (100) extending circumferentially about a valve axis (106) to form a valve chamber (108),
the valve member (102) positioned within the valve chamber (108), the valve member (102) including a valve body (114) forming a valve plug end (120), the valve member (102) positionable along the valve axis (106) in a closed position and an open position, in the closed position of the valve member (102) the valve plug end (120) is seated on the wall portion (92) obstructing the bypass channel (98), in the open position of the valve member (102) the valve plug end (120) is separated from the wall portion (92), and
the valve position assembly disposed at the housing (100), the valve position assembly configured to control a position of the valve member (102) in the closed position or the open position.

2. The engine oil system (34) of claim 1, wherein the valve member (102) further includes a piston (110) and a stem (112), the piston (110) is disposed within the valve chamber (108), and the stem (112) extends along the valve axis (106) between and to the piston (110) and the valve body (114).

3. The engine oil system (34) of claim 2, wherein the valve position assembly includes a spring (122) disposed within the valve chamber (108), the spring (122) is positioned between and contacting the housing (100) and the piston (110), and the spring (122) biases the valve member (102) in the closed position.

4. The engine oil system (34) of claim 1, 2 or 3, wherein the inlet passage (82) extends along an inlet passage centerline axis (88), the outlet passage (84) extends along an outlet passage centerline axis (90), and the inlet passage centerline axis (88) is substantially parallel to the outlet passage centerline axis (90).

5. The engine oil system (34) of any preceding claim, wherein the inlet passage (82) extends along an inlet passage centerline axis (88), the outlet passage (84) extends along an outlet passage centerline axis (90), and the valve axis (106) is substantially orthogonal to the inlet passage centerline axis (88) and the outlet passage centerline axis (90).

6. The engine oil system (34) of any preceding claim, wherein the at least one bypass valve (74) includes a plurality of bypass valves (74A).

7. The engine oil system (34) of any preceding claim, wherein the at least one bypass valve (74) includes an anti-rotation feature (142).

8. An engine oil system (34) for an aircraft propulsion system (20), the engine oil system (34) comprising:
a pump (66) configured to circulate oil along an oil flow path (64) through one or more engine oil loads (62); and
a filter assembly (68) forming a portion of the oil flow path (64), the filter assembly (68) including
a filter manifold (70), a filter (72), and at least one bypass valve (74);
the filter manifold (70) including a manifold body (80), an oil inlet (76), and an oil outlet (78), the manifold body (80) forming an inlet passage (82), an outlet passage (84), and a valve cavity (86), the inlet passage (82) extending between and to the oil inlet (76) and the filter (72), the outlet passage (84) extending between and to the oil outlet (78) and the filter (72), the manifold body (80) including a wall portion (92) forming the inlet passage (82) and the outlet passage (84), the wall portion (92) forming a bypass channel (98) extending between and to the inlet passage (82) and the outlet passage (84); and
the at least one bypass valve (74) including a housing (100), a valve member (102), and a valve positioning assembly (104),
the housing (100) mounted on the manifold body (80), the housing (100) extending circumferentially about a valve axis (106) to form a valve chamber (108),
the valve member (102) positioned within the valve chamber (108), the valve member (102) including a valve body (114) forming a valve plug end (120), the valve member (102) translatable along the valve axis (106) between a closed position and an open position, in the closed position of the valve member (102) the valve plug end (120) is seated on the wall portion (92) obstructing the bypass channel (98), in the open position of the valve member (102) the valve plug end (120) is separated from the wall portion (92), and
the valve position assembly disposed at the housing (100), the valve position assembly including a spring (122) biasing the valve member (102) in the closed position.

9. The engine oil system (34) of claim 8, wherein the inlet passage (82) extends along an inlet passage centerline axis (88), the outlet passage (84) extends along an outlet passage centerline axis (90), and the inlet passage centerline axis (88) is substantially parallel to the outlet passage centerline axis (90).

10. The engine oil system (34) of claim 8 or 9, wherein the inlet passage (82) extends along an inlet passage centerline axis (88), the outlet passage (84) extends along an outlet passage centerline axis (90), and the valve axis (106) is substantially orthogonal to the inlet passage centerline axis (88) and the outlet passage centerline axis (90).

11. The engine oil system (34) of any preceding claim, wherein the at least one bypass valve (74) includes an anti-rotation feature (142), the anti-rotation feature (142) includes a slot (144) and a protrusion (146) disposed in the slot (144), the slot (144) is formed by the valve member (102) and the protrusion (146) is formed by the housing (100).

12. An engine oil system (34) for an aircraft propulsion system (20), the engine oil system (34) comprising:
a filter assembly (68) including a filter manifold (70) and at least one bypass valve (74);
the filter manifold (70) including a manifold body (80), an oil inlet (76), and an oil outlet (78), the manifold body (80) forming an inlet passage (82) and an outlet passage (84), the inlet passage (82) disposed at the oil inlet (76), the outlet passage (84) disposed at the oil outlet (78), the manifold body (80) including a wall portion (92) extending between and to an inlet passage side surface (94) and an outlet passage side surface (96), the inlet passage side surface (94) forming the inlet passage (82), the outlet passage side surface (96) forming the outlet passage (84), the wall portion (92) forming a bypass channel (98) extending between and to the inlet passage side surface (94) and the outlet passage side surface (96); and
the at least one bypass valve (74) including a housing (100), a valve member (102), and a valve positioning assembly (104),
the housing (100) disposed on the manifold body (80), the housing (100) extending circumferentially about a valve axis (106) to form a valve chamber (108) at the outlet passage (84),
the valve member (102) including a piston (110), a stem (112), and a valve body (114), the piston (110) positioned within the valve chamber (108), the stem (112) interconnecting the piston (110) and the valve body (114), the valve body (114) forming a valve plug end (120), the valve member (102) positionable along the valve axis (106) in a closed position and an open position, in the closed position of the valve member (102) the valve plug end (120) is seated on the wall portion (92) obstructing the bypass channel (98), in the open position of the valve member (102) the valve plug end (120) is separated from the wall portion (92), and
the valve position assembly connected to the piston (110), the valve position assembly configured to control a position of the valve member (102) in the closed position or the open position.

13. The engine oil system (34) of claim 12, wherein the valve position assembly includes a spring (122) disposed within the valve chamber (108), the spring (122) is positioned between and contacting the housing (100) and the piston (110), and the spring (122) biases the valve member (102) in the closed position.

14. The engine oil system (34) of any preceding claim, wherein the valve body (114) extends longitudinally between and to a first longitudinal end (124) and a second longitudinal end (126), the valve body (114) includes a first semi-circular end portion (132) at the first longitudinal end (124), a second semi-circular end portion (134) at the second longitudinal end (126), and an intermediate portion (136) connecting the first semi-circular end portion (132) and the second semi-circular end portion (134).

15. The engine oil system (34) of claim 14, wherein the first semi-circular end portion (132) and the second semi-circular end portion (134) have a diameter (D), the intermediate portion (136) has a length (L) extending between and to the first semi-circular end portion (132) and the second semi-circular end portion (134), and a ratio of the length (L) to the diameter (D) is less than or equal to 1.75,
wherein, optionally, the ratio is between 0.25 and 1.75.
